# EUROPEAN PATENT SPECIFICATION

(11) **EP 1 120 035 B1**
(45) Date of publication and mention of the grant of the patent: **16.03.2005**
(21) Application number: 01201696.0
(22) Date of filing: 06.05.1997
(51) Int. Cl.: A01K 1/10, A01K 5/02

(54) **A construction for milking animals, such as cows**
Konstruktion zum Melken von Tieren, sowie Kühen
Construction pour la traite d'animaux, tels que des vaches

(30) Priority: 21.05.1996 NL 1003176
(43) Date of publication of application: 01.08.2001
(62) Divisional of application: 97201351.0
(73) Proprietor: MAASLAND N.V., 3147 PA Maassluis (NL)
(72) Inventor: van der Lely, Cornelis, 6300 Zug (CH)
(74) Representative: Corten, Maurice Jean F.M.

(56) References cited:
- EP-A- 0 619 068
- EP-A- 0 627 160
- WO-A-96/05723
- US-A- 3 620 192

## Description

The present invention relates to a construction for milking animals, such as cows, said construction including at least one milking machine. Such a construction is known from WO 96 05723 A. When the animals are staying in a stable or shed, in which there is also arranged a milking machine, the farmer will have to bring to this shed fodder. Under bad climatic circumstances, this is experienced as a serious disadvantage. Moreover, the farmer will often have to distribute himself the fodder over feed troughs accessible to the cows. This operation will have to be executed manually or with the aid of simple means. In order to obviate such drawbacks, the construction in accordance with the invention is characterized in that there is provided a feeding barrier which is movably disposed in such a way that the animals can take fodder through said feeding barrier, the latter being provided with cutting members for cutting slices of fodder from packs of fodder stacked behind the feeding barrier. In particular when the packs of fodder are stacked relatively highly, it is advantageous when there are provided several cutting members disposed above each other, while a cutting member may be constituted by a knife movable upwards and downwards as well as horizontally. Said cutting member is preferably produced in such a way that it is adapted to be put into the fodder and to cut through the fodder both from the left to the right and vice versa. In order to enable the cutting members to be put into the fodder from the upper side, it is important that the superposed cutting members are disposed in such a manner that they are in a staggered position relative to each other in upward and rearward direction while, in a favourable embodiment, the cutting members are disposed so as to extend upwards in an obliquely rearward direction relative to the feeding barrier. Each time after a cut has been made, it will be possible to move the feeding barrier including the cutting members against the fodder, perpendicularly to the direction of cutting, in particular over a distance corresponding to at the most the distance over which the cutting members are disposed in a staggered position relative to each other in upward and rearward direction. The cutting members may furthermore be disposed so as to be movable through the fodder in a reciprocating manner over the entire length of the feeding barrier.

The fodder cut off falls down and has to be brought within the reach of the animals. For that reason, in accordance with the invention, there are provided one or more feed troughs, which are disposed immediately behind the feeding barrier and in which the fodder cut off is collected. The feeding barrier is provided with apertures having such a size that an animal will be able to put its head therethrough into a separate feed trough. In order to promote a good condition of health of the animals, it will be possible to add fodder additives to their forage. Hence, in accordance with the invention, one or more silos for fodder additives are arranged on the feeding barrier or near thereto.

In particular there may be provided several silos for different fodder additives. These fodder additives may consist of concentrate, such as biks, and/or minerals and/or vitamins, etc. In particular when different fodder additives have to be dispensed, it is important that there are provided mixing elements, connected to one or several silos for these fodder additives and disposed on the feeding barrier, for adding different kinds of fodder additives in specific amounts and in a desired mutual proportion to the fodder. The fodder additives may be added to the fodder in one or more feed troughs disposed near the feeding barrier.

The construction in accordance with the invention may further be provided with an animal identification system comprising a sensor disposed near the feeding barrier, said sensor being connected to at least one feeding computer, and a transponder to be worn by the animal, which transponder cooperates with said sensor. The feeding computer may be programmed in such a manner that for each animal individually the amount of fodder and fodder additives to be dispensed and the desired composition of the fodder additives can be determined. Furthermore there may be provided control means being under the control of the feeding computer for controlling the cutting members for the fodder as well as the supply of fodder additives to the feed troughs.

Besides to a construction for milking animals, the invention also relates to a method of making forage for animals, such as cows, in which method crop is compressed into bales in the field, whereafter the bales are stacked in a silo and fodder is automatically cut therefrom by means of cutting members and then fodder additives are added automatically as well. In this method, it will be possible to cut off, preferably each time, an amount of fodder attuned to the individual animals and to add thereto an amount of fodder additives in a desired composition, said amount being attuned to the individual animals. Each time after an amount of fodder has been cut off, a feeding barrier through which the animals can put their heads or can take forage will be moved against the stacked fodder. After the animals have taken forage through the feeding barrier in the feeding section, they can go to the resting section, whereafter they will be able to go again to the feeding section via the milk box comprising a milking machine, in particular an automatic milking machine including a milking robot, as already described in the foregoing.

The present invention also relates to a construction for milking animals, such as cows, said construction including at least one milking machine. When the animals are staying in a stable or shed, in which there is also arranged a milking machine, the farmer will have to bring to this shed fodder. Under bad climatic circumstances, this is experienced as a serious disadvantage. Moreover, the farmer will often have to distribute himself the fodder over feed troughs accessible to the cows. This operation will have to be executed manually or with the aid of simple means. In order to obviate such drawbacks, the construction in accordance with the invention is characterized in that said construction comprises a silo for fodder, such as silage, and a feeding barrier which is movably disposed in such a manner that, through said feeding barrier, the animals can take fodder from the silo arranged in the construction or near thereto.

The silo in accordance with the invention may be connected to the shed, said silo preferably constitutes part of the shed for the animals.

For that reason the invention also relates to a construction for milking animals, such as cows, said construction including at least one milking machine, which construction is then characterized in that same comprises a silo for fodder, such as silage, said silo constituting part of the shed. Even without the use of a feeding barrier, it will be of advantage, of course, when the silo constitutes part of the shed. This advantage will in particular be experienced in wintertime, especially when the forage is affected by frost. When the silo constitutes part of the shed, there will occur fewer symptoms of frost in the forage.

For the purpose of further facilitating the feeding of the animals, the shed for the animals comprises a feeding section adjacent to the silo, from which feeding section the animals can take fodder. In order to have the animals resting for ruminating after taking fodder, the shed for the animals comprises a resting section provided with cubicles, the feeding section being accessible from the resting section via a milk box in which the milking machine, in particular an automatic milking machine including a milking robot, is arranged. After the period of ruminating, the animals will again be enabled to take forage after first having passed the milk box and having been milked there. In a shed in which there are provided separate sections for resting and feeding it must remain possible, that one section is accessible for the animals from the other section. Hence, in according with the invention, there are provided one or more one-way passages. Insofar as these passages lead from the resting section to the feeding section, they may pass via the milk box.

Although it is possible to dispose pushing means for the forage, which pushing means move the fodder to the feeding barrier, it may be advantageous when the feeding barrier is moved itself. For that purpose the feeding barrier is provided with drive means for moving same in two opposite directions, transversely to the longitudinal direction of the feeding barrier. In this manner the feeding barrier can be pushed against or almost against the stacked fodder, so that the forage is easily accessible for the animals.

For that reason the invention also relates to a construction for milking animals, such as cows, said construction including at least one milking machine, the construction then being characterized in that same comprises a feeding barrier provided with drive means for moving same in two opposite directions, transversely to the longitudinal direction of the feeding barrier, in such a manner that the animals will be able to take fodder through said feeding barrier. In a concrete embodiment in accordance with the invention, the feeding barrier is movable over a rail and the drive means for the feeding barrier are constituted by a step motor and a screw spindle driven thereby.

The invention furthermore relates to a construction for milking animals, such as cows, said construction including at least one milking machine, characterized in that the construction comprises a silo for fodder, such as silage, and a feeding barrier which is movably disposed in such a manner that, through said feeding barrier, the animals can take fodder from the silo arranged in the construction or near thereto. In an embodiment the silo constitutes part of the shed for the animals. In a further embodiment the shed for the animals comprises a feeding section adjacent to the silo for fodder, from which feeding section the animals can take fodder. In a further embodiment the shed for the animals comprises a resting section provided with cubicles and a feeding section which is accessible for the animals from the resting section via a milk box in which the milking machine, in particular an automatic milking machine including a milking robot, is arranged. In a further embodiment the shed for the animals comprises a resting section and a feeding section, one section being accessible for the animals from the other section via one or more one-way passages. In a further embodiment the feeding barrier is provided with drive means for moving same in two opposite directions, transversely to the longitudinal direction of the feeding barrier. In a further embodiment there is provided a feeding barrier through which the animals can take fodder, such as silage, which feeding barrier is movable over a rail, and the drive means are constituted by a step motor and a screw spindle driven thereby. In a further embodiment the feeding barrier is provided with cutting members for cutting slices of fodder from the fodder stacked behind the feeding barrier. In a further embodiment there are provided several cutting members, disposed above each other. In a further embodiment a cutting member is constituted by a knife movable upwards and downwards as well as horizontally. In a further embodiment the cutting members are produced in such a way that they are adapted to be put into the fodder and to cut through the fodder both from the left to the right and vice versa. In a further embodiment the cutting members are disposed so as to be in a staggered position relative to each other in upward and rearward direction. In a further embodiment the cutting members are disposed so as to extend upwards in an obliquely rearward direction relative to the feeding barrier. In a further embodiment each time after a cut has been made, it will be possible to move the feeding barrier including the cutting members against the fodder, perpendicularly to the direction of cutting, over a distance corresponding to at the most the distance over which the cutting members are disposed in a staggered position relative to each other in upward and rearward direction. In a further embodiment the cutting members are movable through the fodder in a reciprocating manner over the entire length of the feeding barrier. In a further embodiment there are provided one or more feed troughs, which are disposed immediately behind the feeding barrier and in which fodder cut off, such as silage, is collected. In a further embodiment the feeding barrier is provided with apertures through which an animal can put its head into a feed trough disposed therebehind. In a further embodiment there are arranged one or more silos for fodder additives on the feeding barrier or near thereto for adding additives to the fodder. In a further embodiment there are provided several silos for different fodder additives. In a further embodiment the fodder additives may consist of concentrate, such as biks, and/or minerals and/or vitamins, etc. In a further embodiment there is provided a mixing element, connected to one or several silos for fodder additives and disposed on the feeding barrier, for adding different kinds of fodder additives in specific amounts and in a desired mutual proportion to the fodder. In a further embodiment the fodder additives are added to the fodder in one or more feed troughs disposed behind the feeding barrier. In a further embodiment there is provided an animal identification system comprising a sensor disposed near the feeding barrier, said sensor being connected to at least one feeding computer, and a transponder to be worn by an animal, which transponder cooperates with said sensor. In a further embodiment the feeding computer is programmed in such a manner that for each animal individually the amount of fodder and fodder additives to be dispensed and the desired composition of the fodder additives are determined. In a further embodiment there are provided control means being under the control of the feeding computer for controlling both the cutting members for the fodder and the supply of fodder additives to the feed troughs.

The invention furthermore relates to a construction for milking animals, such as cows, said construction including at least one milking machine, characterized in that the construction comprises a silo for fodder, such as silage, said silo constituting part of the shed for the animals. In a further embodiment a shed for the animals comprises a feeding section adjacent to the silo for fodder, from which feeding section the animals can take fodder. In a further embodiment the shed for the animals comprises a resting section provided with cubicles and a feeding section which is accessible for the animals from the resting section via a milk box in which the milking machine, in particular an automatic milking machine including a milking robot, is arranged. In a further embodiment the shed for the animals comprises a resting section and a feeding section, one section being accessible for the animals from the other section via one or more one-way passages. In a further embodiment the feeding barrier is provided with drive means for moving same in two opposite directions, transversely to the longitudinal direction of the feeding barrier. In a further embodiment there is provided a feeding barrier through which the animals can take fodder, such as silage, which feeding barrier is movable over a rail, and the drive means are constituted by a step motor and a screw spindle driven thereby. In a further embodiment the feeding barrier is provided with cutting members for cutting slices of fodder from the fodder stacked behind the feeding barrier. In a further embodiment there are provided several cutting members, disposed above each other. In a further embodiment a cutting member is constituted by a knife movable upwards and downwards as well as horizontally. In a further embodiment the cutting members are produced in such a way that they are adapted to be put into the fodder and to cut through the fodder both from the left to the right and vice versa. In a further embodiment the cutting members are disposed so as to be in a staggered position relative to each other in upward and rearward direction. In a further embodiment the cutting members are disposed so as to extend upwards in an obliquely rearward direction relative to the feeding barrier. In a further embodiment each time after a cut has been made, it will be possible to move the feeding barrier including the cutting members against the fodder, perpendicularly to the direction of cutting, over a distance corresponding to at the most the distance over which the cutting members are disposed in a staggered position relative to each other in upward and rearward direction. In a further embodiment the cutting members are movable through the fodder in a reciprocating manner over the entire length of the feeding barrier. In a further embodiment there are provided one or more feed troughs, which are disposed immediately behind the feeding barrier and in which fodder cut off, such as silage, is collected. In a further embodiment the feeding barrier is provided with apertures through which an animal can put its head into a feed trough disposed therebehind. In a further embodiment there are arranged one or more silos for fodder additives on the feeding barrier or near thereto for adding additives to the fodder. In a further embodiment there are provided several silos for different fodder additives. In a further embodiment the fodder additives may consist of concentrate, such as biks, and/or minerals and/or vitamins, etc. In a further embodiment there is provided a mixing element, connected to one or several silos for fodder additives and disposed on the feeding barrier, for adding different kinds of fodder additives in specific amounts and in a desired mutual proportion to the fodder. In a further embodiment the fodder additives are added to the fodder in one or more feed troughs disposed behind the feeding barrier. In a further embodiment there is provided an animal identification system comprising a sensor disposed near the feeding barrier, said sensor being connected to at least one feeding computer, and a transponder to be worn by an animal, which transponder cooperates with said sensor. In a further embodiment the feeding computer is programmed in such a manner that for each animal individually the amount of fodder and fodder additives to be dispensed and the desired composition of the fodder additives are determined. In a further embodiment there are provided control means being under the control of the feeding computer for controlling both the cutting members for the fodder and the supply of fodder additives to the feed troughs.

The invention furthermore relates to a construction for milking animals, such as cows, said construction including at least one milking machine, characterized in that the construction comprises a feeding barrier provided with drive means for moving same in two opposite directions, transversely to the longitudinal direction of the feeding barrier, in such a manner that the animals will be able to take fodder through said feeding barrier. In a further embodiment there is provided a feeding barrier through which the animals can take fodder, such as silage, which feeding barrier is movable over a rail, and the drive means are constituted by a step motor and a screw spindle driven thereby. In a further embodiment the feeding barrier is provided with cutting members for cutting slices of fodder from the fodder stacked behind the feeding barrier. In a further embodiment there are provided several cutting members, disposed above each other. In a further embodiment a cutting member is constituted by a knife movable upwards and downwards as well as horizontally. In a further embodiment the cutting members are produced in such a way that they are adapted to be put into the fodder and to cut through the fodder both from the left to the right and vice versa. In a further embodiment the cutting members are disposed so as to be in a staggered position relative to each other in upward and rearward direction. In a further embodiment the cutting members are disposed so as to extend upwards in an obliquely rearward direction relative to the feeding barrier. In a further embodiment each time after a cut has been made, it will be possible to move the feeding barrier including the cutting members against the fodder, perpendicularly to the direction of cutting, over a distance corresponding to at the most the distance over which the cutting members are disposed in a staggered position relative to each other in upward and rearward direction. In a further embodiment the cutting members are movable through the fodder in a reciprocating manner over the entire length of the feeding barrier. In a further embodiment there are provided one or more feed troughs, which are disposed immediately behind the feeding barrier and in which fodder cut off, such as silage, is collected. In a further embodiment the feeding barrier is provided with apertures through which an animal can put its head into a feed trough disposed therebehind. In a further embodiment there are arranged one or more silos for fodder additives on the feeding barrier or near thereto for adding additives to the fodder. In a further embodiment there are provided several silos for different fodder additives. In a further embodiment the fodder additives may consist of concentrate, such as biks, and/or minerals and/or vitamins, etc. In a further embodiment there is provided a mixing element, connected to one or several silos for fodder additives and disposed on the feeding barrier, for adding different kinds of fodder additives in specific amounts and in a desired mutual proportion to the fodder. In a further embodiment the fodder additives are added to the fodder in one or more feed troughs disposed behind the feeding barrier. In a further embodiment there is provided an animal identification system comprising a sensor disposed near the feeding barrier, said sensor being connected to at least one feeding computer, and a transponder to be worn by an animal, which transponder cooperates with said sensor. In a further embodiment the feeding computer is programmed in such a manner that for each animal individually the amount of fodder and fodder additives to be dispensed and the desired composition of the fodder additives are determined. In a further embodiment there are provided control means being under the control of the feeding computer for controlling both the cutting members for the fodder and the supply of fodder additives to the feed troughs.

The invention furthermore relates to a method of feeding animals, such as cows, in which method the crop is stacked in at least one silo and the animals are enabled to go to the silo for taking fodder, the arrangement being such that the animals will be able to go to the fodder and, therefore, it will become more or less superfluous to transport the fodder to the animals as is usually done. In a further embodiment an amount of fodder attuned to the individual animals is cut off and an amount of fodder additives in a desired composition is added thereto, said amount being attuned to the individual animals. In a further embodiment each time after cutting off an amount of fodder, a feeding barrier, through which the animals can put their heads for taking forage, will be moved against the fodder stacked. In a further embodiment after having taken forage through the feeding barrier in a feeding section, are enabled to go to a separate resting section, whereafter they will be able to go again to the feeding section via a milk box comprising a milking machine, in particular an automatic milking machine including a milking robot.

The invention furthermore relates to a method of composing forage for animals, such as cows, in which method crop is compressed into bales in the field, whereafter the bales are stacked in a silo and fodder is automatically cut therefrom by means of cutting members and then fodder additives are added automatically as well. In a further embodiment preferably each time, an amount of fodder attuned to the individual animals is cut off and an amount of fodder additives in a desired composition is added thereto, said amount being attuned to the individual animals. In a further embodiment each time after an amount of fodder has been cut off, a feeding barrier through which the animals can put their heads or can take forage is moved against the stacked fodder. In a further embodiment after the animals have taken forage through the feeding barrier in the feeding section, they can go to the resting section, whereafter they will be able to go again to the feeding section via the milk box comprising a milking machine, in particular an automatic milking machine including a milking robot.

For a better understanding of the invention, reference will now be made to the accompanying drawings, in which:
Figure 1 shows schematically an arrangement of the shed, in which the shed comprises a silo, a feeding section and a resting section for the animals;
Figure 2 shows schematically a longitudinal cross-section of such a shed;
Figure 3 shows a cross-section of the feeding barrier including cutting members and a silo for fodder additives, and
Figure 4 shows a view of part of the feeding barrier, seen from the feeding section in the shed.

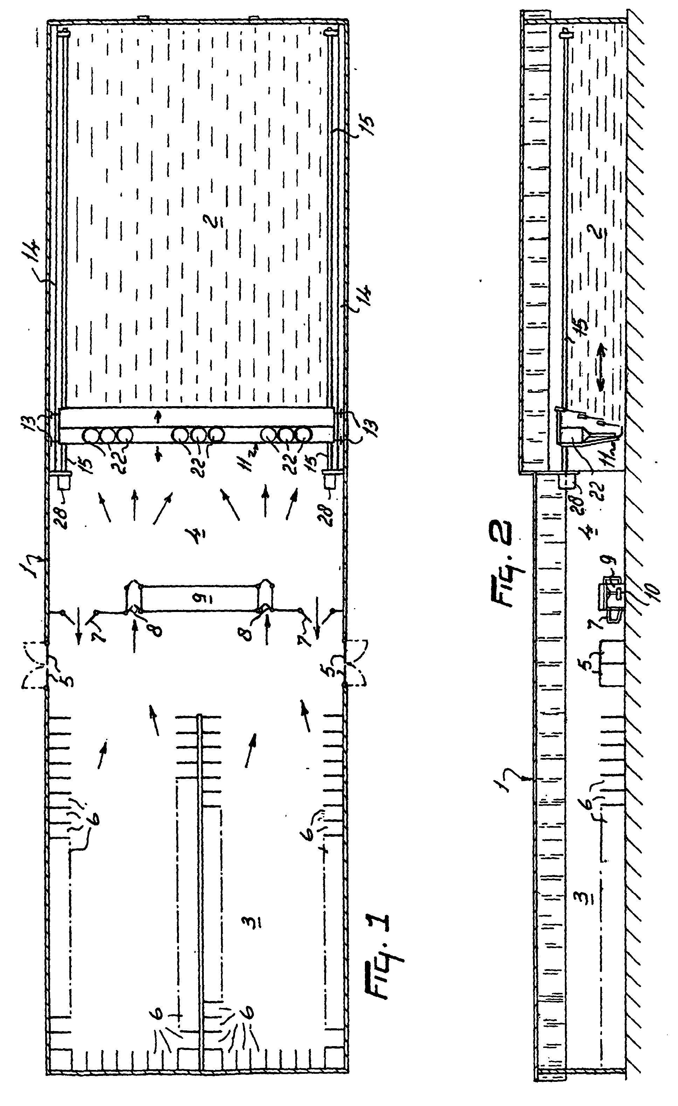

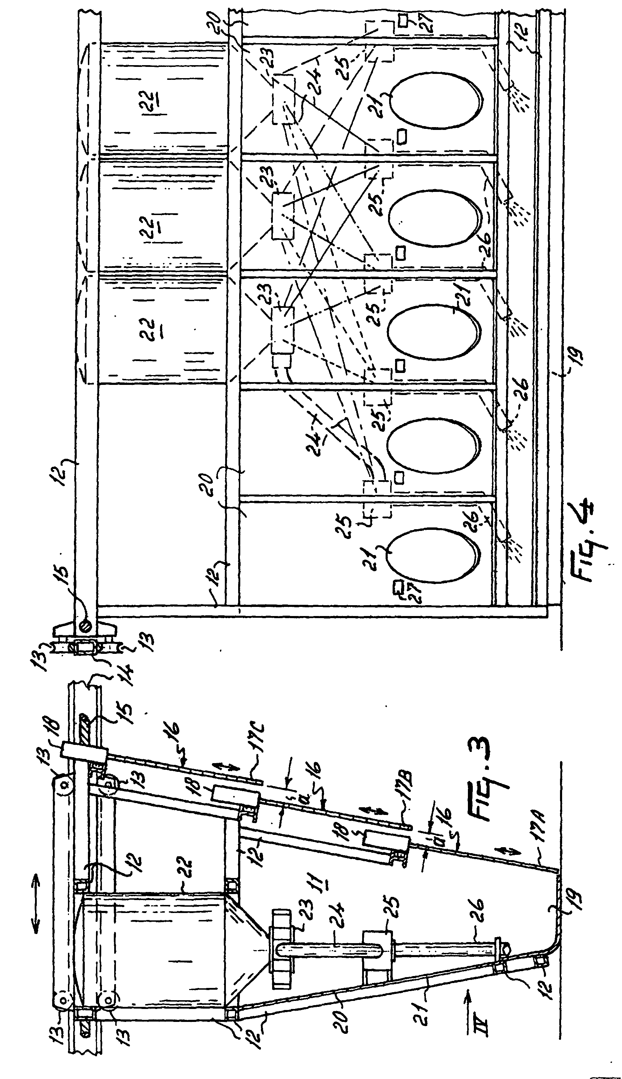

In Figures 1 and 2 the shed is indicated by the reference numeral 1. This shed comprises a silo 2 for fodder, such as cut or chopped fodder, and/or packs of fodder, which may be stacked in said space, as well as a resting section 3 and a feeding section 4 for the animals staying in the shed. The shed 1 is furthermore provided with doors 5 via which the animals may be led into the shed or may be led from there to the meadow. In the resting section 3 of the shed there are provided a number of cubicles 6; in Figure 1 these are disposed at the longitudinal sides of the outer wall of the shed and in the longitudinal centre thereof as well as at one of the short sides of the shed along the outer wall thereof. The connection between the resting section 3 and the feeding section 4 is constituted by one-way passages 7 and 8. Via the passages 7 the animals can go from the feeding section to the resting section 3. At the boundary of the resting section 3 and the feeding section 4 there is provided a space 9 where one or more milking machines, in particular automatic milking machines including a milking robot 10, may be arranged. Via the passages 8 the animals can go from the resting section to the feeding section. However, under normal circumstances the animals will have to pass first through the space 9, because, prior to being enabled again to take forage in the feeding section, they will first have to be milked in the space 9. From the space 9 they will then be admitted to the feeding section 4. In the silo 2 there is disposed a feeding barrier 11 constituting the partition between the fodder stored in the silo 2 and the feeding section 4 of the shed 1. In the present embodiment, the feeding barrier 11 is movable in the longitudinal direction of the shed. When the silo 2 has entirely been filled with stacked material, the feeding barrier in Figures 1 and 2 will be located as far as possible on the left in the direction of the feeding section 4 of the shed. The more fodder is eaten by the animals, the more the feeding barrier will move further to the right. The feeding barrier will be pushed as much as possible against the stacked fodder. As it will be explained with the aid of Figures 3 and 4, the animals staying in the feeding section 4 will be able to take forage through the feeding barrier 11. When the animals have taken enough forage, they can go to the resting section 3 via the passages 7 in order to ruminate in one of the cubicles 6 in said resting section 3. After some time has elapsed, they will be able to return to the feeding section 4 via the space 9 for the milking machine where they can be milked.

The feeding barrier 11 is constituted by a frame 12 extending in the transverse direction of the shed, which frame 12 is fastened to the two longitudinal sides of the silo 2 by means of roller pairs 13 over a beam 14 so as to be movable through the silo in the longitudinal direction of the shed. The frame 12 is moved through the silo with the aid of drive means constituted by a screw spindle 15 which is driven by means of a step motor 28. By means of said drive means the feeding barrier 11 is movable through the silo in two directions transversely to the longitudinal direction of the feeding barrier.

The feeding barrier 11 is furthermore provided with cutting members 16 for cutting slices of fodder from packs of fodder stacked behind the feeding barrier 11. The cutting members 16 are constituted by knives 17A, 17B and 17C capable of moving upwards and downwards as well as horizontally, which knives are disposed above each other, which is important when the fodder is stacked highly. The knives are disposed in such a manner that they are in a staggered position relative to each other in upward and rearward direction, i.e. the knife 17B is active in a plane which is shifted upwards and rearwards over a distance a in the direction of the silo relative to the plane in which the knife 17A is active and the knife 17C is shifted upwards and rearwards over said distance α relative to the cutting member 17B. In the present embodiment, the knives extend upwardly in an obliquely rearward direction. The knives 17A, 17B and 17C can be moved upwards in relevant holders 18, whereafter the entire feeding barrier can be moved backwards over a distance α, whereafter the knife can be put again into the fodder for cutting therein both from the left to the right and vice versa. When a slice of fodder has been cut off in this manner, the knives can be moved upwards and put again into the fodder, so that a second slice can be cut off. The fodder cut off falls into a feed trough 19 from which the animals can take the fodder. For that purpose, the feeding barrier is provided at its front side with plates 20 in which, in the present embodiment, there are provided oval apertures 21 through which the animals can put their heads in order to take forage from the feed trough 19 disposed therebehind. In the present embodiment, there are arranged on the feeding barrier 11 a number of silos for fodder additives to be added to the fodder. In Figure 1 three times three suchlike silos 22 are arranged, which silos are intended for three different kinds of fodder additives. These fodder additives may consist of concentrate, such as biks, and minerals, vitamins, etc. Via metering elements 23 and connecting tubes or hoses 24 these fodder additives are supplied to a mixing element 25 from which the fodder additives in the desired composition are supplied via the tube 26 to the fodder present in the feed trough 19.

In a preferred embodiment, there are furthermore provided separate feed troughs 19 behind the apertures 21, so that it will be possible to give each animal the right amount of forage in the right composition and with the right additives. However, for that purpose it must be known which animal has put its head through which aperture 21. For that reason there is provided a non-shown animal identification system comprising a sensor 27 disposed near the feeding barrier, said sensor being connected to at least one feeding computer, and a transponder to be worn by an animal, which transponder cooperates with said sensor 27. In principle, near each aperture 21 there will be disposed such a sensor 27. After an animal has put its head through an aperture 21 and has been identified by means of the animal identification system, a file present in the feeding computer will be activated, with the aid of which file the right amount of forage in the right composition will be given to the animal. In other words, the control means for the knives for cutting off fodder and for the supply of the fodder additives to the feed trough are controlled from the (non-shown) feeding computer.

By making use of a construction as described it will be possible to realize a method of making forage, in which method crop is pressed into bales in the field, whereafter the bales are stacked in the silo 2 and fodder is automatically cut therefrom by means of cutting members 16, whereafter fodder additives are automatically supplied from the silos 22. By making use moreover of an animal identification system, it will be possible to cut off each time an amount of fodder attuned to the individual animals and to add thereto an amount of fodder additives in a desired composition, said amount being attuned to the individual animals. Each time after an amount of fodder has been cut off, the feeding barrier 11 through which the animals can put their heads to take forage will be moved against the stacked fodder. After the animals have taken forage through the feeding barrier 11 in the feeding section 3, they can go to the resting section 3, whereafter they will go again to the feeding section 4 via the milk box 9 in which the milking machine is arranged.

The invention is not restricted to the above-described embodiment, but also relates to all modifications thereof, of course being within the scope of the terms of the following claims.

In this connection it is noticed that also silage can be applied in the silo in a favourable manner, said silage having been chopped or having been cut already in the field.

## Claims

1. A construction for milking animals, such as cows, said construction including at least one milking machine, **characterized in that** there is provided a feeding barrier (11) which is movably disposed in such a manner that, through said feeding barrier (11), the animals can take fodder, the feeding barrier (11) being provided with cutting members (16) for cutting slices of fodder from the fodder stacked behind the feeding barrier (11).

2. A construction as claimed in claim 1, **characterized in that** there are provided several cutting members (16), disposed above each other.

3. A construction as claimed in claim 1 or 2, **characterized in that** a cutting member (16) is constituted by a knife (17A, 17B, 17C) movable upwards and downwards as well as horizontally.

4. A construction as claimed in any one of the preceding claims, **characterized in that** the cutting members (16) are produced in such a way that they are adapted to be put into the fodder and to cut through the fodder both from the left to the right and vice versa.

5. A construction as claimed in any one of the preceding claims, **characterized in that** the cutting members (16) are disposed so as to be in a staggered position relative to each other in upward and rearward direction.

6. A construction as claimed in any one of the preceding claims, **characterized in that** the cutting members (16) are disposed so as to extend upwards in an obliquely rearward direction relative to the feeding barrier (11).

7. A construction as claimed in any one of the preceding claims, **characterized in that,** each time after a cut has been made, it will be possible to move the feeding barrier (11) including the cutting members (16) against the fodder, perpendicularly to the direction of cutting, over a distance corresponding to at the most the distance over which the cutting members (16) are disposed in a staggered position relative to each other in upward and rearward direction.

8. A construction as claimed in any one of the preceding claims, **characterized in that** the cutting members (16) are movable through the fodder in a reciprocating manner over the entire length of the feeding barrier (11).

9. A construction as claimed in any one of the preceding claims, **characterized in that** there are provided one or more feed troughs (19), which are disposed immediately behind the feeding barrier (11) and in which fodder cut off, such as silage, is collected.

10. A construction as claimed in any one of the preceding claims, **characterized in that** the feeding barrier (11) is provided with apertures (21) through which an animal can put its head into a feed trough (19) disposed therebehind.

11. A construction as claimed in any one of the preceding claims, **characterized in that** there are arranged one or more silos (22) for fodder additives on the feeding barrier (11) or near thereto for adding additives to the fodder.

12. A construction as claimed in claim 11, **characterized in that** there are provided several silos (22) for different fodder additives.

13. A construction as claimed in claim 11 or 12, **characterized in that** the fodder additives may consist of concentrate, such as biks, and/or minerals and/or vitamins, etc.

14. A construction as claimed in any one of claims 11 to 13, **characterized in that** there is provided a mixing element (25), connected to one or several silos (22) for fodder additives and disposed on the feeding barrier (11), for adding different kinds of fodder additives in specific amounts and in a desired mutual proportion to the fodder.

15. A construction as claimed in any one of claims 11 to 14, **characterized in that** the fodder additives are added to the fodder in one or more feed troughs (19) disposed behind the feeding barrier (11).

16. A construction as claimed in any one of the preceding claims, **characterized in that** there is provided an animal identification system comprising a sensor (27) disposed near the feeding barrier (11), said sensor (27) being connected to at least one feeding computer, and a transponder to be worn by an animal, which transponder cooperates with said sensor (27).

17. A construction as claimed in claim 16, **characterized in that** the feeding computer is programmed in such a manner that for each animal individually the amount of fodder and fodder additives to be dispensed and the desired composition of the fodder additives are determined.

18. A construction as claimed in claim 17, **characterized in that** there are provided control means being under the control of the feeding computer for controlling both the cutting members (16) for the fodder and the supply of fodder additives to the feed troughs (19).

## Patentansprüche

1. Vorrichtung zum Melken von Tieren, wie z. B. von Kühen, wobei die Vorrichtung mindestens eine Melkmaschine enthält,
**dadurch gekennzeichnet, daß** ein Futtergitter (11) vorhanden ist, das in der Weise beweglich angeordnet ist, daß die Tiere durch das Futtergitter (11) Futter aufnehmen können, wobei das Futtergitter (11) mit Schneidgliedern (16) zum Abschneiden von Futterscheiben von dem hinter dem Futtergitter (11) aufgestapelten Futter versehen ist.

2. Vorrichtung nach Anspruch 1,
**dadurch gekennzeichnet, daß** mehrere Schneidglieder (16) vorgesehen sind, die übereinander angeordnet sind.

3. Vorrichtung nach Anspruch 1 oder 2,
**dadurch gekennzeichnet, daß** ein Schneidglied (16) durch ein Messer (17A, 17B, 17C) gebildet ist, das sich nach oben und unten sowie in horizontaler Richtung bewegen kann.

4. Vorrichtung nach einem der vorhergehenden Ansprüche,
**dadurch gekennzeichnet, daß** die Schneidglieder (16) derart ausgebildet sind, daß sie geeignet sind, in das Futter eingeführt zu werden und durch das Futter von links nach rechts und umgekehrt zu schneiden.

5. Vorrichtung nach einem der vorhergehenden Ansprüche,
**dadurch gekennzeichnet, daß** die Schneidglieder (16) derart angeordnet sind, daß sie relativ zueinander nach oben und hinten versetzt sind.

6. Vorrichtung nach einem der vorhergehenden Ansprüche,
**dadurch gekennzeichnet, daß** die Schneidglieder (16) derart angeordnet sind, daß sie sich relativ zu dem Futtergitter (11) nach oben und schräg nach hinten erstrecken.

7. Vorrichtung nach einem der vorhergehenden Ansprüche,
**dadurch gekennzeichnet, daß** das Futtergitter (11) mit den Schneidgliedern (16) nach jedem Schnitt senkrecht zur Schneidrichtung über eine Distanz auf das Futter zu bewegt werden kann, die maximal der Distanz entspricht, über die die Schneidglieder (16) nach oben und hinten versetzt zueinander angeordnet sind.

8. Vorrichtung nach einem der vorhergehenden Ansprüche,
**dadurch gekennzeichnet, daß** die Schneidglieder (16) über die gesamte Länge des Futtergitters (11) durch das Futter hin- und herbewegt werden können.

9. Vorrichtung nach einem der vorhergehenden Ansprüche,
**dadurch gekennzeichnet, daß** ein oder mehrere Futtertröge (19) vorhanden sind, die unmittelbar hinter dem Futtergitter (11) angeordnet sind, und von denen abgeschnittenes Futter, wie z. B. Silage, aufgenommen wird.

10. Vorrichtung nach einem der vorhergehenden Ansprüche,
**dadurch gekennzeichnet, daß** das Futtergitter (11) mit Öffnungen (21) versehen ist, durch die ein Tier seinen Kopf in einen dahinter angeordneten Futtertrog (19) stecken kann.

11. Vorrichtung nach einem der vorhergehenden Ansprüche,
**dadurch gekennzeichnet, daß** ein oder mehrere Silos (22) für Futterzusatzstoffe an dem Futtergitter (11) oder nahe demselben angeordnet sind, um dem Futter Zusatzstoffe zuzusetzen.

12. Vorrichtung nach Anspruch 11,
**dadurch gekennzeichnet, daß** mehrere Silos (22) für unterschiedliche Futterzusatzstoffe vorhanden sind.

13. Vorrichtung nach Anspruch 11 oder 12,
**dadurch gekennzeichnet, daß** die Futterzusatzstoffe aus Kraftfutter, wie z. B. Kraftfutterpellets, und/oder Mineralien und/oder Vitaminen usw. bestehen können.

14. Vorrichtung nach einem der Ansprüche 11 bis 13,
**dadurch gekennzeichnet, daß** ein Mischelement (25) vorhanden ist, das mit einem oder mehreren Silos (22) für Futterzusatzstoffe verbunden und an dem Futtergitter (11) angebracht ist, um dem Futter unterschiedliche Arten von Futterzusatzstoffen in bestimmten Mengen und in einem gewünschten Verhältnis zueinander zuzusetzen.

15. Vorrichtung nach einem der Ansprüche 11 bis 14,
**dadurch gekennzeichnet, daß** die Futterzusatzstoffe dem Futter in einem oder mehreren Futtertrögen (19) zugesetzt werden, die hinter dem Futtergitter (11) angeordnet sind.

16. Vorrichtung nach einem der vorhergehenden Ansprüche,
**dadurch gekennzeichnet, daß** ein Tieridentifikationssystem vorhanden ist, das einen Sensor (27) umfaßt, der nahe dem Futtergitter (11) angeordnet ist, wobei der Sensor (27) mit mindestens einem Fütterungscomputer verbunden ist, sowie einen von einem Tier zu tragenden Transponder umfaßt, der mit dem Sensor (27) zusammenwirkt.

17. Vorrichtung nach Anspruch 16,
**dadurch gekennzeichnet, daß** der Fütterungscomputer derart programmiert ist, daß die zuzuteilende Menge an Futter und Futterzusatzstoffen und die gewünschte Zusammensetzung der Futterzusatzstoffe für jedes Tier einzeln festgelegt wird.

18. Vorrichtung nach Anspruch 17,
**dadurch gekennzeichnet, daß** eine von dem Fütterungscomputer gesteuerte Steuerung vorhanden ist, um sowohl die Schneidglieder (16) für das Futter als auch die Zufuhr von Futterzusatzstoffen zu den Futtertrögen (19) zu steuern.

## Revendications

1. Construction pour la traite d'animaux, tels que des vaches, ladite construction comprenant au moins une machine de traite, **caractérisée en ce qu'**il est prévu une barrière d'alimentation (11) qui est disposée de façon mobile d'une manière telle que, par l'intermédiaire de ladite barrière d'alimentation (11), les animaux peuvent prendre du fourrage, la barrière d'alimentation (11) étant pourvue d'éléments de coupe (16) destinés à couper des morceaux de fourrage à partir du fourrage empilé derrière la barrière d'alimentation (11).

2. Construction selon la revendication 1, **caractérisée en ce que** plusieurs éléments de coupe (16), disposés les uns au-dessus des autres, sont prévus.

3. Construction selon la revendication 1 ou 2, **caractérisée en ce qu'**un élément de coupe (16) est constitué par une lame (17A, 17B, 17C) mobile vers le haut et vers le bas ainsi que dans le sens horizontal.

4. Construction selon l' une quelconque des revendications précédentes, **caractérisée en ce que** les éléments de coupe (16) sont produits de telle sorte qu'ils sont adaptés pour être placés à l'intérieur du fourrage et pour effectuer une coupe à travers le fourrage à la fois de gauche à droite et vice versa.

5. Construction selon l'une quelconque des revendications précédentes, **caractérisée en ce que** les éléments de coupe (16) sont disposés de manière à être dans une position empilée les uns par rapport aux autres dans une direction orientée vers le haut et vers l'arrière.

6. Construction selon l'une quelconque des revendications précédentes, **caractérisée en ce que** les éléments de coupe (16) sont disposés de manière à s'étendre vers le haut d'une manière orientée de façon oblique vers l'arrière par rapport à la barrière d'alimentation (11).

7. Construction selon l'une quelconque des revendications précédentes, **caractérisée en ce que**, chaque fois qu'une coupe a été réalisée, il sera possible de déplacer la barrière d'alimentation (11) comprenant les éléments de coupe (16) contre le fourrage, perpendiculairement à la direction de coupe, sur une distance correspondant au maximum à la distance sur laquelle les éléments de coupe (16) sont disposés dans une position empilée les uns par rapport aux autres dans une direction orientée vers le haut et vers l'arrière.

8. Construction selon l'une quelconque des revendications précédentes, **caractérisée en ce que** les éléments de coupe (16) sont mobiles à travers le fourrage en va-et-vient sur l'ensemble de la longueur de la barrière d'alimentation (11).

9. Construction selon l'une quelconque des revendications précédentes, **caractérisée en ce qu'**il est prévu une ou plusieurs caisse(s) d'alimentation (19), qui est (sont) disposée(s) immédiatement derrière la barrière d'alimentation (11) et dans laquelle(lesquelles) est stocké, le fourrage coupé, tel que l'ensilage.

10. Construction selon l'une quelconque des revendications précédentes, **caractérisée en ce que** la barrière d'alimentation (11) est pourvue d'ouvertures (21) à travers lesquelles un animal peut placer sa tête à l'intérieur d'une caisse d'alimentation (19) disposée derrière ladite barrière.

11. Construction selon l'une quelconque des revendications précédentes, **caractérisée en ce qu'**un ou plusieurs silo(s) (22) pour des additifs de fourrage est(sont) disposé(s) sur la barrière d'alimentation (11) ou à proximité de celle-ci pour ajouter des additifs au fourrage.

12. Construction selon la revendication 1, **caractérisée en ce que** plusieurs silos (22) sont prévus pour différents additifs de fourrage.

13. Construction selon la revendication 11 ou 12, **caractérisée en ce que** les additifs de fourrage peuvent être constitués d'un concentré, tels que des aliments pour animaux, et/ou des minéraux et/ou des vitamines, etc.

14. Construction selon l'une quelconque des revendications 11 à 13, **caractérisée en ce qu'**il est prévu un élément de mélange (25), raccordé à un ou plusieurs silo(s) (22) pour les additifs de fourrage et disposé sur la barrière d'alimentation (11), pour ajouter différents types d'additifs de fourrage dans des quantités spécifiques et dans une proportion mutuelle souhaitée par rapport au fourrage.

15. Construction selon l'une quelconque des revendications 11 à 14, **caractérisée en ce que** les additifs de fourrage sont ajoutés au fourrage dans une ou plusieurs caisse(s) d'alimentation (19) disposée(s) derrière la barrière d'alimentation (11).

16. Construction selon l'une quelconque des revendications précédentes, **caractérisée en ce qu'**il est prévu un système d'identification de l'animal comprenant un capteur (27) disposé à proximité de la barrière d'alimentation (11), ledit capteur (27) étant raccordé à au moins un ordinateur d'alimentation, et un transpondeur destiné à être porté par un animal, lequel transpondeur coopère avec ledit capteur (27).

17. Construction selon la revendication 16, **caractérisée en ce que** l'ordinateur d'alimentation est programmé d'une manière telle que pour chaque animal individuellement, la quantité de fourrage et d'additifs de fourrage destinée à être distribuée et la composition souhaitée des additifs de fourrage sont déterminées.

18. Construction selon la revendication 17, **caractérisée en ce qu'**il est prévu des moyens de contrôle, contrôlés par l'ordinateur d'alimentation, destinés à contrôler à la fois les éléments de coupe (16) du fourrage et l'amenée d'additifs de fourrage aux caisses d'alimentation (19).
